# EUROPÄISCHE PATENTANMELDUNG

(11) **EP 2 472 098 A1**
(43) Veröffentlichungstag der Anmeldung: **04.07.2012**
(21) Anmeldenummer: 11191098.0
(22) Anmeldetag: 29.11.2011
(51) Int. Cl.: F02N 15/00, H02K 5/00, H02K 15/00

(54) **Startvorrichtung für eine Brennkraftmaschine**

(30) Priorität: 28.12.2010 DE 102010064260
(71) Anmelder: Robert Bosch GmbH, 70442 Stuttgart (DE)
(72) Erfinder: Capek, Oliver, 70195 Stuttgart (DE)

(57) **Zusammenfassung**

Die vorliegende Erfindung betrifft Startvorrichtung für eine Brennkraftmaschine mit einem, in einem Gehäuse (10) angeordneten Andrehmotor, dessen Antriebswelle (17) an einem hinteren Ende gegenüber dem Gehäuse (10) mittels einer Haltescheibe (51) axial fixiert ist, wobei ein über die Haltescheibe (51) überstehender Teil der Antriebswelle (17) von einer Verschlusskappe (200) abgedeckt ist, dadurch gekennzeichnet, dass die Verschlusskappe (200) wenigstens eine innenliegende Ausformung (201) zum Beaufschlagen der Haltescheibe (51) aufweist.

## Beschreibung

Die vorliegende Erfindung betrifft eine Startvorrichtung für eine Brennkraftmaschine nach dem Oberbegriff des Anspruchs 1.

### Stand der Technik

Startvorrichtungen für Brennkraftmaschinen, sogenannte Anlasser oder Starter, sind im Stand der Technik bekannt. Beispielsweise zeigt die DE 298 01 079 U1 eine gattungsgemäße Startvorrichtung mit einem in einem Gehäuse angeordneten Andrehmotor, dessen Antriebswelle am hinteren Ende gegenüber dem Gehäuse mittels einer Haltescheibe axial fixiert ist. Die Haltescheibe ist im Wesentlichen U-förmig ausgebildet und in einer Nut der Antriebswelle angeordnet. Die Haltescheibe ist sowohl axial als auch radial bewegbar, d. h. nicht spielfrei. In der Folge kann beim Betrieb der Startvorrichtung die Haltescheibe in schnelle Rotation versetzt werden und dabei am Gehäuse bzw. einer dieses verschließenden Verschlusskappe anschlagen und dieses bzw. diese beschädigen. Beispielsweise kann es vorkommen, dass die Verschlusskappe abgetrennt wird.

Es ist daher wünschenswert, eine Beschädigung oder gar Zerstörung des Gehäuses bzw. der Verschlusskappe zu vermeiden.

### Offenbarung der Erfindung

Erfindungsgemäß wird eine Startvorrichtung mit den Merkmalen des Anspruchs 1 vorgeschlagen. Vorteilhafte Ausgestaltungen sind Gegenstand der Unteransprüche sowie der nachfolgenden Beschreibung.

### Vorteile der Erfindung

Die erfindungsgemäße Lehre umfasst insbesondere, dass die Haltescheibe durch innenliegende Ausformungen bzw. Auswölbungen der Verschlusskappe beaufschlagt wird. Damit kann - je nach Ausgestaltung der Ausformungen - ein axiales und/oder radiales Spiel der Haltescheibe vermindert oder ganz beseitigt werden. Somit werden Beschädigungen des Gehäuses bzw. der Verschlusskappe verringert oder ganz vermieden. Die in den abhängigen Ansprüchen beschriebenen Ausgestaltungen weisen insbesondere den Vorteil der einfachen Herstellbarkeit auf und erweisen sich in der Praxis als robust und zuverlässig.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Kurze Beschreibung der Zeichnungen

Figur 1 zeigt einen Längsschnitt durch eine bevorzugte Ausführungsform einer erfindungsgemäßen Startvorrichtung.
Figur 2 zeigt eine erste Ausführungsform einer für eine erfindungsgemäße Startvorrichtung geeigneten Verschlusskappe.
Figur 3 zeigt eine zweite Ausführungsform einer für eine erfindungsgemäße Startvorrichtung geeigneten Verschlusskappe.
Figur 4 zeigt eine dritte Ausführungsform einer für eine erfindungsgemäße Startvorrichtung geeigneten Verschlusskappe.

### Ausführungsform(en) der Erfindung

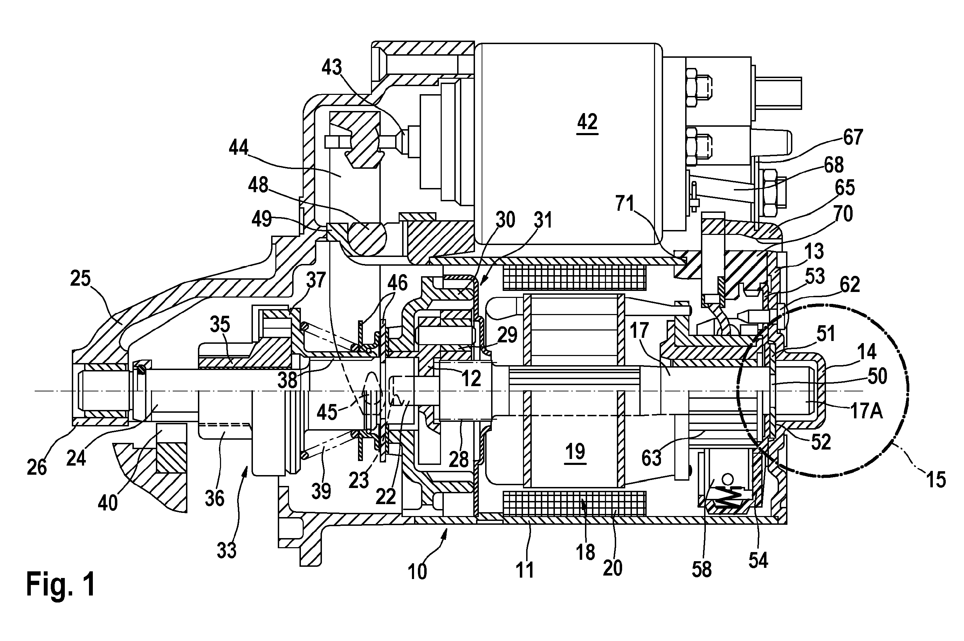

In Figur 1 ist eine bevorzugte Ausführungsform einer erfindungsgemäßen Andreh- bzw. Startvorrichtung in einem Längsschnitt schematisch dargestellt. Ein Gehäuse 10 der Andrehvorrichtung besteht aus einem zylindrischen Gehäuseteil 11 und einem Deckel 13, die durch nicht weiter dargestellte Schrauben miteinander verbunden sind. Das zylindrische Gehäuseteil 11 ist hinten durch den Deckel 13 verschlossen, in dessen Mittelteil eine Verschlusskappe 14 vorgesehen ist. In der gezeigten Abbildung erstreckt sich die Verschlusskappe 14 hutförmig im Wesentlichen über die gesamte Rückwand des Gehäuses 10 und entspricht dem Deckel 13. Es versteht sich jedoch, dass Verschlusskappe 14 und Deckel 13 ebenso getrennt vorgesehen sein können.

Durch die Verschlusskappe 14 wird ein hinteres Ende 17A einer Antriebswelle 17 eines elektrischen Andrehmotors 18 abgedeckt, dessen Anker mit 19 bezeichnet ist. Radial außerhalb des Ankers befinden sich an der Wand des Gehäuseteils 11 mehrere Permanentmagnete 20 des Andrehmotors.

Das vordere Ende der Antriebswelle 17 ist mit einem im Durchmesser reduzierten Endabschnitt 22 in einer achsgleich verlaufenden, nicht weiter dargestellten Sackbohrung 23 einer Abtriebswelle 24 gelagert. Das andere Ende der Abtriebswelle 24 ist in einem das Gehäuseteil 11 verschließenden Lagerschild 25 und einer an diesem angeformten Nabe 26 gelagert.

Die Antriebswelle 17 hat nahe ihrem dem Lagerschild zugewandten Ende eine Verzahnung 28 (Sonnenrad), in welche Planetenräder 29 eingreifen, die auch mit einem außenliegenden, feststehenden Hohlrad 30 eines Planetengetriebes 31 kämmen (= Vorgelege). Ein Planetenträger 12 treibt die Abtriebswelle 24 an, auf welcher ein Freilauf 33 angeordnet ist, dessen Innenring einen Fortsatz 35 (Ritzel) aufweist, an dem eine Außenverzahnung 36 ausgebildet ist. Der Außenring 37 des Freilaufs 33 ist über ein Steilgewinde 38 mit der Abtriebswelle verbunden. Auf ihn wirkt eine sogenannte Einspurfeder 39 ein. Durch axiales Verschieben des Freilaufs 33 kann die Außenverzahnung 36 mit einem Zahnkranz 40 der Brennkraftmaschine zwecks des Startvorgangs in Eingriff gebracht werden. Dies geschieht mit Hilfe eines Einrückrelais 42, in welchem beim Einschalten des Stroms ein Magnetanker über einen Fortsatz 43 einen Hebel 44 verschwenkt, der über eine Kulisse 45, die zwischen Scheiben 46 liegt, den Freilauf 33 nach links verschiebt. Der Hebel 44 ist zweiarmig ausgebildet und mittels Zapfen 48, in einem gehäusefesten Lager 49 schwenkbar angeordnet.

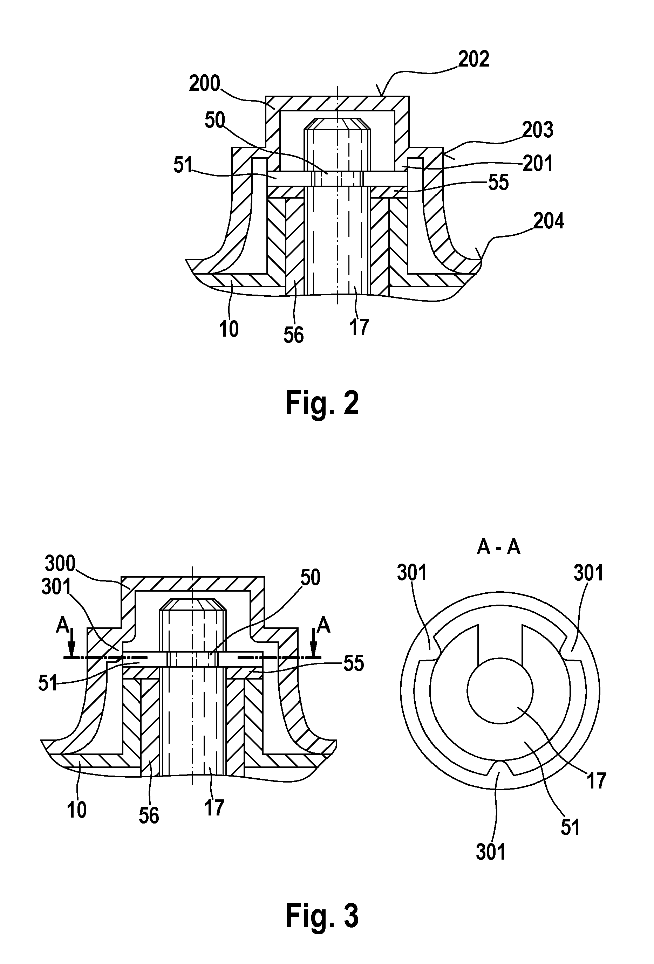

Die Antriebswelle 17 hat nahe ihrem hinteren lagerseitigen Ende 17A eine Ringnut 50, in welche eine Federstahl-Scheibe 51 mit einem entsprechend weiten Schlitz eindringt - diese ist etwa U-förmig ausgebildet - und liegt einerseits an einer Ausformung 52 der Verschlusskappe 14 an, andererseits an einer Bürstenplatte 53, welche mit dem Deckel 13 verschraubt ist. Die Scheibe 51 dient als Haltescheibe zur axialen Fixierung der Antriebswelle 17 gegenüber dem Gehäuse 10. Die Verschlusskappe 14 ist zweckmäßigerweise zumindest teilweise elastisch ausgebildet, um bei der Beaufschlagung der Haltescheibe 51 durch die Ausformung 52 nicht beschädigt zu werden, sondern eine ausreichende Haltekraft bereitzustellen. Alternativ oder zusätzlich kann die Verschlusskappe 14 zumindest teilweise, bspw. im Bereich der Ausformungen, plastisch verformbar ausgebildet sein, um eine ausreichende Beaufschlagung der Haltescheibe 51 zu ermöglichen. Verschiedene Ausführungsformen der in einem Ausschnitt 15 dargestellten Elemente werden in den Figuren 2 bis 4 detaillierter dargestellt.

An der Bürstenplatte 53 sind insbesondere aus Kunststoff bestehende Bürstenhalter 54 befestigt, in welchen Kohlen 58 angeordnet sind, die sich unter Federdruck an einen Kommutator 63 anlegen, welcher an der Antriebswelle 17 angeordnet ist. Bei einem Teil der Kohlen handelt es sich um Minuskohlen, bei dem anderen Teil um Pluskohlen. Diese sind über Anschlusslitzen 65 an einen Kabelschuh 67 angeschlossen, der mit einem Kontakt 68 des Einrückrelais verbunden ist. Die Litzen 65 durchdringen eine Dichtung 70, welche im Gehäuseteil 11 in einer Öffnung 71 angeordnet ist. Die Bürstenplatte ist mit Schrauben 62 am Deckel 13 befestigt.

In Figur 2 ist eine beispielsweise für eine Startvorrichtung gemäß Figur 1 geeignete Verschlusskappe schematisch im Längsschnitt dargestellt und mit 200 bezeichnet. Die Verschlusskappe 200 ist an einem Gehäuse 10 einer nur ausschnittsweise dargestellten Startvorrichtung angebracht. Die Verschlusskappe 200 ist im Wesentlichen hutförmig mit einer Deckfläche 202, einer Mantelfläche 203 und einer Bodenfläche 204 ausgebildet.

Innerhalb der Startvorrichtung ist die Ankerwelle 17 gelagert, die an ihrem oberen Ende eine Nut 50 aufweist, in der eine Haltescheibe 51 angeordnet ist. Die Haltescheibe 51 überträgt die Axialkraft der Antriebswelle 17 auf eine unterlagerte Ausgleichsscheibe 55 und von dort auf ein Wellenlager bzw. Kommutatorlager 56.

Die Verschlusskappe 200 weist eine innenliegende, axial hervorstehende Ausformung bzw. Auswölbung 201 auf, die als umlaufender Flansch oder als eine Anzahl umlaufend angeordneter Flanschaugen ausgeführt sein kann. Beim Befestigen der Verschlusskappe am Gehäuse 10 wird die Haltescheibe 51 von dem Flansch bzw. den Flanschaugen 201 mit einer Kraft beaufschlagt, so dass ein axiales Spiel der Haltescheibe 51 vermindert oder beseitigt werden kann. In der Folge wird zunächst eine Beschädigung des Gehäuses oder der Verschlusskappe durch die Haltescheibe vermindert bzw. vermieden. Weiterhin wird das axiale Spiel der Antriebswelle 17 beschränkt, so dass diese nur noch in einem durch die Ausdehnung der Nut 50 und die Ausdehnung der Haltescheibe 51 in Axialrichtung definierten Bereich bewegbar ist. Somit kann zusätzlich auch ein Verschleiß der Antriebswelle bzw. der mit dieser verbundenen Elemente wie z. B. Wicklungen, Magnete usw. vermindert werden. Besonders können Qualitätsschwankungen hinsichtlich Wirkungsgrad und Leistung dadurch minimiert werden.

Eine weitere Ausführungsform einer erfindungsgemäß geeigneten Verschlusskappe ist in Figur 3 im Längsschnitt und im Querschnitt schematisch dargestellt und mit 300 bezeichnet. Die Elemente in Figur 3, die denen in Figur 2 entsprechen, sind mit denselben Bezugszeichen versehen. Zum Verringern des radialen Spiels der Haltescheibe 51 und damit der Antriebswelle 17 weist die Verschlusskappe 300 eine oder mehrere innenliegende Ausformungen 301 zum Beaufschlagen der Haltescheibe 51 auf. Die Ausformungen 301 sind hier als drei innenliegende Sicken ausgeführt, die die Haltescheibe mit einer Kraft beaufschlagen. Die Sicken weisen neben der radialen Ausdehnung auch eine axiale Ausdehnung auf, um beim Anbringen der Verschlusskappe 300 die Haltescheibe 51 zu beaufschlagen. Die Haltescheibe 51 wird so fixiert, dass diese bei drehender Antriebswelle 17 entweder nicht oder nur wenig mitdreht.

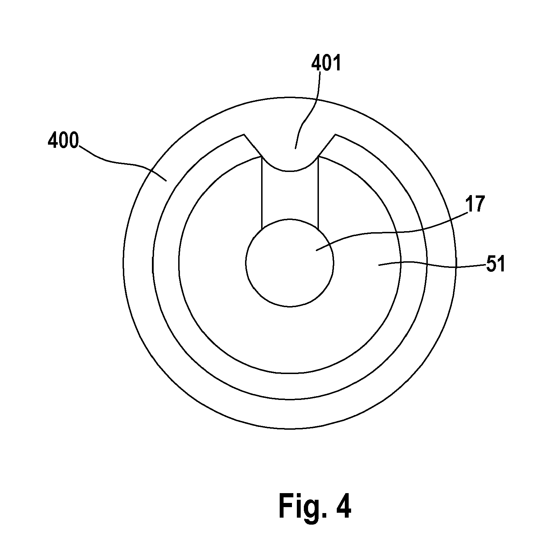

In Figur 4 ist eine weitere Ausführungsform einer für die Erfindung geeigneten Verschlusskappe in einer Querschnittsansicht schematisch dargestellt und mit 400 bezeichnet. Die Querschnittsansicht verläuft auf Höhe der Haltescheibe 51. Die Verschlusskappe 400 weist eine innenliegende Ausformung 401 zum Beaufschlagen der Haltescheibe 51 auf. Die Ausformung 401 ist als nur eine innenliegende Sicke mit radialer und axialer Ausdehnung ausgebildet, welche in den Schlitz der Haltescheibe 51 eingreift und so ein Rotieren der Haltescheibe verhindern kann.

Insbesondere die in den Figuren 2 bis 4 dargestellten Ausformungen sind in geeigneter Ausgestaltung geeignet, neben dem radialen auch das axiale Spiel der Haltescheibe zu vermindern. Dazu können die Ausformungen beispielsweise kegelförmig ausgebildet sein, um die Haltescheibe radial und axial zu beaufschlagen.

Es versteht sich, dass in den dargestellten Figuren nur beispielhafte Ausführungsformen der Erfindung dargestellt sind. Daneben ist jede andere Ausführungsform denkbar, ohne den Rahmen dieser Erfindung zu verlassen. Insbesondere sind die in den einzelnen Figuren gezeigten und beschriebenen Elemente, insbesondere betreffend Material, Form, Elastizität der Verschlusskappen usw., beliebig kombinierbar.

## Patentansprüche

1. Startvorrichtung für eine Brennkraftmaschine mit einem, in einem Gehäuse (10) angeordneten Andrehmotor (18), dessen Antriebswelle (17) an einem hinteren Ende (17A) gegenüber dem Gehäuse (10) mittels einer Haltescheibe (51) axial fixiert ist, wobei ein über die Haltescheibe (51) überstehender Teil der Antriebswelle (17) von einer Verschlusskappe (14; 200; 300; 400) abgedeckt ist,
**dadurch gekennzeichnet, dass**
die Verschlusskappe (14; 200; 300; 400) wenigstens eine innenliegende Ausformung (201; 301; 401) zum Beaufschlagen der Haltescheibe (51) aufweist.

2. Startvorrichtung nach Anspruch 1, wobei im montierten Zustand der Verschlusskappe (14; 200; 300; 400) die Ausformungen (201; 301; 401) die Haltescheibe (51) axial beaufschlagen.

3. Startvorrichtung nach Anspruch 1 oder 2, wobei im montierten Zustand der Verschlusskappe (14; 200; 300; 400) die Ausformungen (201; 301; 401) die Haltescheibe (51) radial beaufschlagen.

4. Startvorrichtung nach einem der vorstehenden Ansprüche wobei die Verschlusskappe (14; 200; 300; 400) im Wesentlichen hutförmig mit einer Mantelfläche (203), einer Deckfläche (202) und einer Bodenfläche (204) ausgebildet ist.

5. Startvorrichtung nach Anspruch 4, wobei die wenigstens eine innenliegende Ausformung (201; 301; 401) in der Mantelfläche (203) und/oder in der Bodenfläche (204) ausgebildet ist.

6. Startvorrichtung nach einem der vorstehenden Ansprüche wobei die wenigstens eine innenliegende Ausformung als umlaufender Flansch (201) oder als eine Anzahl von Flanschabschnitten (201) ausgebildet ist.

7. Startvorrichtung nach einem der vorstehenden Ansprüche, wobei die wenigstens eine innenliegende Ausformung als wenigstens eine Sicke (301; 401) ausgebildet ist.

8. Startvorrichtung nach einem der vorstehenden Ansprüche, wobei die Verschlusskappe (14; 200; 300; 400) zumindest teilweise elastisch ausgebildet ist.

9. Startvorrichtung nach einem der vorstehenden Ansprüche, wobei die Verschlusskappe (14; 200; 300; 400) zumindest teilweise plastisch verformbar ausgebildet ist.
